# EUROPÄISCHE PATENTSCHRIFT

(11) **EP 1 279 839 B1**
(45) Veröffentlichungstag und Bekanntmachung des Hinweises auf die Patenterteilung: **13.10.2004**
(21) Anmeldenummer: 02015534.7
(22) Anmeldetag: 10.07.2002
(51) Int. Cl.: F16B 19/10, F16B 37/00

(54) **Schraubblindniet-Verbindungsanordnung**
Connector assembly having a screw and a blind rivet
Ensemble de liaison à vis et rivet aveugle

(30) Priorität: 23.07.2001 DE 20112171 U
(43) Veröffentlichungstag der Anmeldung: 29.01.2003
(73) Patentinhaber: Böllhoff GmbH, 33649 Bielefeld (DE)
(72) Erfinder: Süssenbach, Rainer, 33803 Steinhagen (DE)
(74) Vertreter: Wehnert, Werner, Dipl.-Ing.

(56) Entgegenhaltungen:
- EP-A- 1 033 501
- ES-A- 8 506 147
- GB-A- 1 218 617
- US-A- 6 029 332
- US-A- 6 067 839

## Beschreibung

Die vorliegende Erfindung betrifft eine Schraubblindniet-Verbindungsanordnung zum Verbinden eines unteren und oberen Bauteils.

Derartige Verbindungsanordnungen bestehen im einfachsten Fall aus einer Schraube und einer Blindnietmutter aus elastisch verformbarem Material, die in Befestigungslöcher der beiden Bauteile eingesteckt und hierbei miteinander verschraubt werden. Beim Eindrehen der Schraube in die Blindnutmutter weitet sich ein elastisch verformbarer Abschnitt der Blindnietmutter zu einem Nietwulst auf, der sich an die Rückseite des unteren Bauteils anlegt und damit die Verbindung gegen Lösen sichert. Ist der Nietwulst, der im Prinzip die Form eines Ringflansches hat, zu weich, so werden die Bauteile nicht mit ausreichender Haltekraft zusammengehalten. Ist der Nietwulst dagegen zu hart, so besteht die Gefahr, dass er spröde wird, was die Lebensdauer der Verbindung entsprechend verringert. Generell lässt sich sagen, dass derartige Schraubblindniet-Verbindungen nur begrenzt belastbar sind. Ein weiterer Nachteil verschiedener derartiger Verbindungen besteht darin, dass sie im allgemeinen toleranzbedingte Schwankungen im Abstand der beiden zu verbindenden Bauteile nicht ausgleichen können. Ferner lässt sich im allgemeinen das Anziehdrehmoment für die Schraube nicht sinnvoll vorgeben, so dass bei einem zu niedrigen Anziehdrehmoment keine einwandfreie Verbindung entsteht und bei einem zu großen Anziehdrehmoment die Verbindung beschädigt oder zerstört wird.

Eine Schraubblindniet-Verbindungsanordnung nach dem Oberbegriff des Patentanspruches 1 ist aus US-A-2,887,926, Fig. 7 bekannt. Bei dieser vorbekannten Verbindungsanordnung entspricht die Dicke des Flansches des Blindniet dem Abstand zwischen den beiden zu verbindenden Bauteilen, so dass der Flansch als Abstandshalter zwischen den beiden Bauteilen dient. Das Unterteil des Blindniet ist offen, so dass der Schaft der Schraube durch das unter Ende des Blindniet hindurchtreten kann.

Der vorliegenden Erfindung liegt die Aufgabe zugrunde, eine funktionssichere, hoch belastbare und dauerfeste Schraubblindniet-Verbindungsanordnung zum Verbinden eines unteren und oberen Bauteils zu schaffen, die einen Ausgleich toleranzbedingter Schwankungen des Abstandes zwischen den beiden Bauteilen ermöglicht, wobei ein vorgebbares definiertes Antriebsdrehmoment für die Schraube sichergestellt wird.

Diese Aufgabe wird durch die in Anspruch 1 definierte Erfindung gelöst.

Die erfindungsgemäß ausgebildete Schraubblindniet-Verbindungsanordnung besteht aus einer Schraube und einem mutterartigen Blindniet aus einem elastisch verformbaren Material. Der Blindniet hat ein hülsenförmiges Unterteil und ein hülsenförmiges Oberteil, deren Wandstärke so bemessen ist, dass das Unterteil eine hohe Steifigkeit und das Oberteil eine hohe Flexibilität hat, und die durch eine schulterförmig abgesetzte Übergangsstelle geringer Wandstärke einstückig miteinander verbunden sind, so dass beim Einschrauben der Schraube in das Unterteil des Blindniet die Wand des Oberteils auf der Außenfläche des Unterteils abrollt und hierdurch zu einem Nietwulst gefaltet wird, der an der Außenfläche des Unterteils anliegt, um ein Lösen der Verbindung zu verhindern.

Durch diese Formgebung des Blindniet wird eine genau definierte Form des Nietwulstes sichergestellt. Da ferner der von dem Oberteil gebildete Nietwulst an der Außenfläche des Unterteils des Blindniets anliegt, ergibt sich eine funktionssichere, hoch belastbare und dauerfeste Verbindung zwischen den beiden Bauteilen. Die erfindungsgemäß ausgebildete Verbindungsanordnung zeichnet sich daher durch hohe Funktionssicherheit und lange Lebensdauer aus.

Die Festigkeit und Belastbarkeit der Verbindung können noch dadurch erhöht werden, dass das Unterteil und das Oberteil des Blindniet jeweils an ihrer Außenfläche als Mehrkant ausgebildet sind, wobei die Mehrkantflächen des Unterteils jeweils zu den Mehrkantflächen des Unterteils axial ausgerichtet sind.

Gemäß der Erfindung ist ferner vorgesehen, dass das Unterteil des Blindniet an seinem unteren Ende mit einem Boden versehen ist, der als Anschlagbegrenzung für die Einschraubbewegung der Schraube dient. Hierdurch wird erreicht, dass die Schraube mit einem präzise vorgebbarem Anziehdrehmoment in den Blindniet eingeschraubt werden kann, ohne dass die Gefahr besteht, dass die Verbindung zwischen den beiden Bauteilen zu wenig oder zu stark belastet wird. Außerdem ist hierdurch ein Ausgleich toleranzbedingter Schwankungen des Abstandes zwischen den beiden Bauteilen möglich.

Weitere vorteilhafte Ausgestaltungen und Weiterbildungen der Erfindung gehen aus den Unteransprüchen hervor.

Anhand der Zeichnungen wird ein Ausführungsbeispiel der Erfindung näher erläutert. Es zeigt:
Fig. 1 eine Schraube für eine erfindungsgemäß ausgebildete Schraubblindniet-Verbindungsanordnung;
Fig. 2 einen Blindniet für die Verbindungsanordnung;
Fig. 3 eine Draufsicht auf den Blindniet in Fig. 2;
Fig. 4 eine Schnittansicht in Blickrichtung der Pfeile IV-IV in Fig. 2;
Fig. 5 eine Schnittansicht in Blickrichtung der Pfeile V-V in Fig. 2
Figuren 6 - 8 Schnittansichten der Verbindungsanordnung beim Zusammenbau.

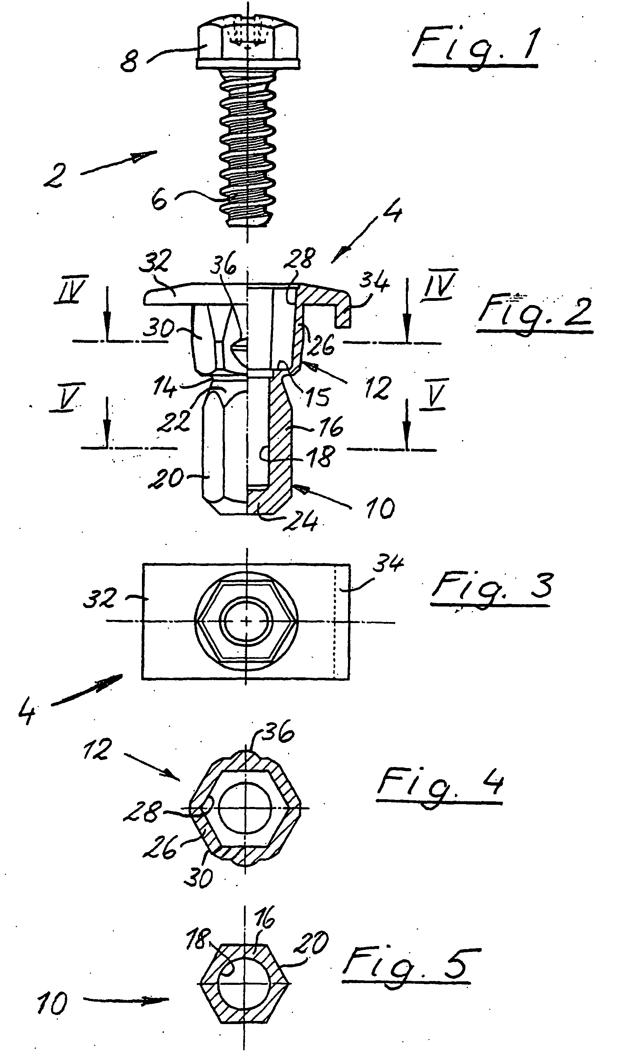

Die in den Zeichnungen dargestellte Schraubblindniet-Verbindungsanordnung besteht aus einer Schraube 2, die in Fig. 1 als Einzelteil dargestellt ist, und einem mutterartigen Blindniet 4, der in den Figuren 2 bis 5 als Einzelteil dargestellt ist.

Wie in Fig. 1 gezeigt, besteht die Schraube 2 in üblicher Weise aus einem Gewindeschaft 6 und einem Schraubenkopf 8. Hierbei kann es sich um eine gewöhnliche Normschraube handeln. Vorzugsweise ist die Schraube 2 jedoch als selbstfurchende Schraube mit einem Rundgewinde ausgebildet. Sie besteht aus einem hochfesten Kunststoff, wenngleich sie auch aus Stahl bestehen kann.

Der in den Figuren 2 bis 5 dargestellte Blindniet 4 besteht aus einem hülsenförmigen Unterteil 10 und einem hülsenförmigen Oberteil 12, die durch eine schulterförmig abgesetzte Übergangsstelle 14 einstückig miteinander verbunden sind.

Das hülsenförmige Unterteil 10 hat eine Wand 16 einer relativ großen Wandstärke, welche dem Unterteil 10 eine entsprechend hohe Steifigkeit verleiht. Das Unterteil 10 ist mit einer glatten Aufnahmebohrung 18 zur Aufnahme des Gewindeschaftes 6 der Schraube 2 versehen. Die Aufnahmebohrung 18 ist so ausgebildet, dass die selbstfurchende Schraube 2 beim Einschrauben in das Unterteil 10 ein entsprechendes Gewinde formt. Die Aufnahmebohrung 18 könnte jedoch auch mit einem vorgeformten Gewinde versehen werden.

Die Außenfläche 20 des Unterteils 10 ist als Mehrkant, im dargestellten Ausführungsbeispiel als Sechskant, ausgebildet, so dass die Außenfläche 20 von einer entsprechenden Anzahl von ebenen Mehrkantflächen gebildet wird. Die Außenfläche 20 geht durch einen sich nach oben verjüngenden konischen Flächenabschnitt 20 in die Übergangsstelle 14 über, wodurch die Übergangsstelle 14 eine entsprechend geringe Wandstärke erhält. An seinem unteren Ende ist das Unterteil 10 durch einen Boden 24 verschlossen, der als Anschlagbegrenzung für die Schraube 2 dient, wie im folgenden noch genauer erläutert wird.

Das Oberteil 12 hat eine Wand 26, deren Wandstärke wesentlich kleiner als die des Unterteils 10 ist, um dem Oberteil 12 eine entsprechende Flexibilität zu verleihen. Die Wand 26 schließt sich an die Übergangsstelle 14 über eine nach außen verlaufende Schulter 15 an, so dass der Innendurchmesser des Oberteils 12 deutlich größer als der der Aufnahmebohrung 18 des Unterteils 10 ist.

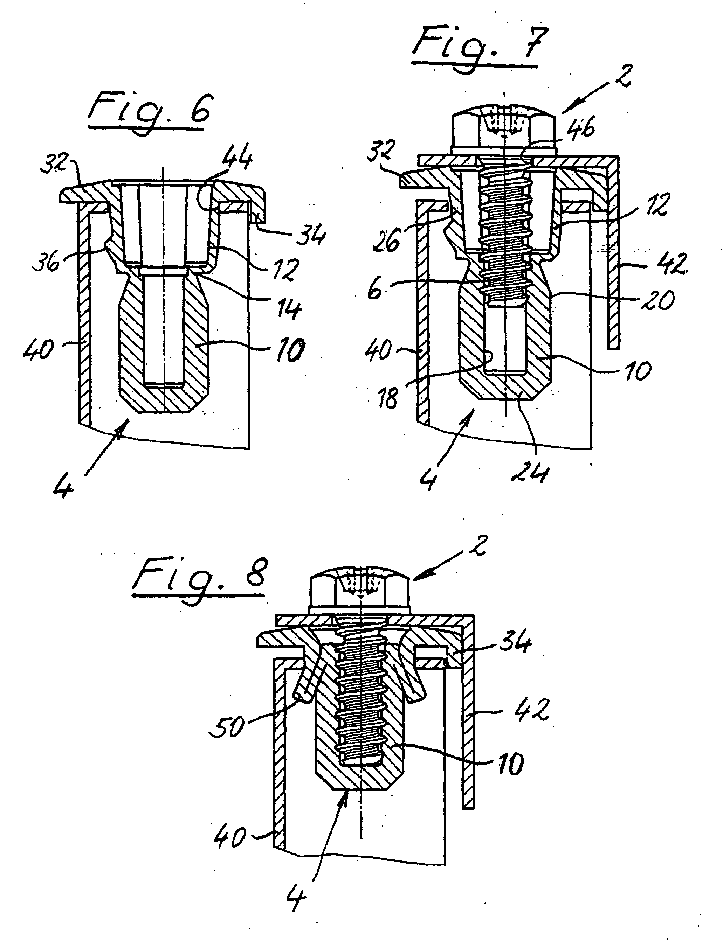

Wie insbesondere aus Fig. 4 hervorgeht, ist die Wand 26 des Oberteils 12 sowohl an seiner Innenfläche 28 wie auch an seiner Außenfläche 30 als Mehrkant (Sechskant) entsprechend dem Mehrkant des Unterteils 10 ausgebildet. Die ebenen Mehrkantflächen des Ober- und Unterteils 10, 12 sind in axialer Richtung zueinander ausgerichtet, wie insbesondere ein Vergleich der Figuren 4 und 5 deutlich macht. Die hierdurch erzielbare Wirkung wird im folgenden noch genauer erläutert.

Am oberen Ende des Oberteils 12 ist ein - im dargestellten Ausführungsbeispiel rechteckiger - Flansch 32 angeformt, der an seiner einen Seite einen nach unten ragenden Ansatz 34 hat, welcher als Verdrehsicherung dient.

An der Außenfläche 30 des Oberteils 12 sind zwei diametral gegenüberliegende Noppen 36 angeformt, wobei die Anzahl der Noppen natürlich auch anders gewählt werden kann. Die Noppen 36 dienen als Verliersicherung, wie ebenfalls noch erläutert wird.

Der einstückig ausgebildete Blindniet 4 besteht aus einem schlagzähen, elastisch verformbarem Material, insbesondere aus einem Kunststoff wie Polyamid, einem thermoplastischen Elastomer oder Gummi. Das Material muss jedenfalls so gewählt werden, dass sich das Oberteil 12 problemlos und ohne Bruchgefahr zu einem Nietwulst falten lässt.

Die von der Schraube 2 und dem Blindniet 4 gebildete Verbindungsanordnung dient zum Verbinden zweier Bauteile 40, 42 (Figuren 6 bis 8), die zumindest im Verbindungsbereich plattenförmig ausgebildet und übereinander angeordnet sind. Zur Aufnahme der Schraube 2 und des Blindniet 4 sind die Bauteile 40, 42 jeweils mit einem entsprechend dimensionierten Befestigungsloch 44 bzw. 46 versehen.

Anhand der Figuren 6 bis 8 wird nun der Zusammenbau der Verbindungsanordnung beschrieben. Wie in Fig. 6 dargestellt, wird zunächst der Blindniet 4 von oben in das Befestigungsloch 44 des unteren Bauteils 40 eingesteckt. Der Durchmesser des Befestigungsloches 44 ist so gewählt, dass er kleiner ist als der Abstand zwischen den Außenflächen der diametral gegenüberliegenden Noppen 36 (Fig. 4). Das Oberteil 12 muss daher etwas nach innen verformt werden, um in das Befestilgungsloch 44 des unteren Bauteils 40 "eingeclipst" werden zu können. Die Noppen 36 dienen dann als Verliersicherung, so dass das untere Bauteil 40 und der Blindniet 4 problemlos zusammen gehandhabt werden können, ehe die Verbindung mit dem oberen Bauteil 42 hergestellt wird.

Der Blindniet 4 wird in das Befestigungsloch 44 des unteren Bauteils 40 so eingesetzt, dass der Ansatz 34 des Flansches 32 an einer Aussenkante des unteren Bauteils 40 anliegt. Der Blindniet 4 ist dadurch gegen Verdrehen gesichert. Es könnte natürlich auch eine andere Form einer Drehsicherung vorgesehen werden, beispielsweise in der Weise, dass das Befestigungsloch 44 einen unrunden Querschnitt entsprechend der Außenfläche 30 des Oberteils 12 hat.

Wie in Fig. 6 gezeigt, liegt der Blindniet 4 zunächst mit seinem Flansch 32 an der Oberseite des unteren Bauteils 40 auf. Es wird nun das obere Bauteil 42 über dem unteren Bauteil 40 angeordnet, wobei normalerweise konstruktionsbedingt ein vorgegebener Abstand zwischen Unterteil 40 und Oberteil 42 vorhanden ist. Die Schraube 2 wird dann durch das Befestigungsloch 46 hindurch in die Aufnahmebohrung 18 des Unterteils 4 eingeschraubt. Hierdurch wird zunächst das Unterteil 4 angehoben, bis der Flansch 32 an der Unterseite des oberen Bauteils 42 anliegt. Aufgrund der Konstruktion der Verbindungsanordnung ist auf diese Weise ein Ausgleich von toleranzbedingten Schwankungen des Abstandes zwischen dem unteren Bauteil 40 und dem oberen Bauteil 42 möglich.

Beim weiteren Einschrauben der Schraube 2 in die Aufhahmebohrung 18 des Blindniet 4 wird das flexible Oberteil 12 nach außen so verformt, dass die Wand 26 um die Übergangsstelle 14 herum gebogen wird und dann auf dem kegelförmigen Flächenabschnitt 22 und der Außenfläche 20 des Unterteils 10 abrollt. Hierdurch wird die Wand 26 des Oberteils 12 zu einem Nietwulst 50 gefaltet wird, wie in Fig. 8 zu sehen ist.

Zu beachten ist, dass hierbei die Mehrkantflächen der Außenfläche 30 des Oberteils 12 auf den hierzu ausgerichteten Mehrkantflächen der Außenfläche 20 des Unterteils 10 zu liegen kommen. Hierdurch wird die durch das Eindrehen der Schraube 2 hervorgerufene Torsionsbeanspruchung des Blindniet 4 insbesondere an der Übergangsstelle 14 aufgefangen. Die Gefahr einer Abscherung an der Übergangsstelle 14 wird auf diese Weise verhindert. Außerdem werden die Stabilität und Festigkeit des Nietwulstes 50 und der hierdurch hergestellten Verbindung zwischen den beiden Bauteilen 40, 42 entsprechend erhöht.

Die Schraube 2 wird in die Aufnahmebohrung 18 des Unterteils 10 so weit eingeschraubt, bis sie sich an den Boden 24 anlegt. Der Boden 24 dient somit als Anschlagbegrenzung für die Einschraubbewegung der Schraube 2. Hierdurch wird ein genau vorgebbares Anziehdrehmoment für die Schraube definiert, bei der die Verbindung hergestellt ist. Die Schraube 2 kann daher mit einem entsprechend vorgegebenen Anziehdrehmoment eingeschraubt werden, ohne dass die Gefahr einer zu geringen oder zu großen Beanspruchung der Verbindung besteht. Toleranzbedingte Schwankungen des Abstandes zwischen den beiden Bauteilen 40, 42 bleiben hierbei ohne nachteilige Auswirkungen.

## Patentansprüche

1. Schraubblindniet-Verbindungsanordnung zum Verbinden eines unteren Bauteils (40) mit einem oberen Bauteil (42), bestehend aus einer Schraube (2) und einem mutterartigen Blindniet (4), die in Befestigungslöcher (44, 46) der beiden Bauteile (40, 42) einsteckbar und zum Herstellen der Verbindung miteinander verschraubbar sind, wobei der Blindniet (4), der aus einem elastisch verformbaren Material besteht, ein hülsenförmiges Unterteil (10) und ein hülsenförmiges Oberteil (12) hat, deren Wandstärke so bemessen ist, dass das Unterteil (10) eine hohe Steifigkeit und das Oberteil (12) eine hohe Flexibilität hat, und die durch eine schulterförmig abgesetzte Übergangsstelle (14) geringer Wandstärke einstückig miteinander verbunden sind, so dass beim Einschrauben der Schraube (2) in das Unterteil (10) des Blindniet (4) die Wand (26) des Oberteils (12) auf der Außenfläche (20) des Unterteils (10) abrollt und hierdurch zu einem Nietwulst (50) gefaltet wird, der an der Außenfläche (20) des Unterteils (10) anliegt, um ein Lösen der Verbindung zu verhindern, wobei das Oberteil (12) des Blindniet (4) an seinem oberen Ende einen Flansch (32) hat, der in eingebautem Zustand zwischen dem oberen und unteren Bauteil (40, 42) liegt, **dadurch gekennzeichnet, dass** das obere und untere Bauteil (40, 42) mit einem vorgegebenen Abstand zueinander angeordnet sind, der größer als die Dicke des Flansches (32) des Blindniet (4) ist, so dass beim Einschrauben der Schraube (2) in das Unterteil (10) der Blindniet angehoben wird, bis der Flansch (32) des Blindniet (4) an der Unterseite des oberen Bauteils (42) anliegt, und dass das Unterteil (10) des Blindniet (4) an seinem unteren Ende durch einen Boden (24) verschlossen ist, dessen Abstand von dem Flansch (32) so bemessen ist, dass der Boden (24) als Anschlagbegrenzung für die Einschraubbewegung der Schraube (2) dient.

2. Schraubblindniet-Verbindungsanordnung nach Anspruch 1, **dadurch gekennzeichnet, dass** das Unterteil (10) und das Oberteil (12) des Blindniet (4) jeweils an ihrer Außenfläche (20, 30) als Mehrkant ausgebildet sind, und die Mehrkantflächen des Oberteils (12) jeweils zu den Mehrkantflächen des Unterteils (10) axial ausgerichtet sind, damit sie sich bei der Nietwulstbildung flächig aneinander anlegen, und das Unterteil (10) torsionsentlastet in das Oberteil (12) einläuft.

3. Schraubblindniet-Verbindungsanordnung nach Anspruch 1 oder 2, **dadurch gekennzeichnet, dass** die Außenfläche (20) des Unterteils (10) durch einen konusförmigen Flächenabschnitt (22) in die Übergangsstelle (14) übergeht.

4. Schraubblindniet-Verbindungsanordnung nach einem der vorhergehenden Ansprüche, **dadurch gekennzeichnet, dass** das Oberteil (12) an seiner Außenfläche (30) Noppen (36) hat, die als Verliersicherung dienen.

5. Schraubblindniet-Verbindungsanordnung nach einem der vorhergehenden Ansprüche, **dadurch gekennzeichnet, dass** das Oberteil (26) des Blindniet (4) bezüglich des Befestigungsloches (44) des unteren Bauteils (40) so dimensioniert ist, dass der Nietwulst (50) in das Befestigungsloch (44) des unteren Bauteils (40) hinein gefaltet wird.

6. Schraubblindniet-Verbindungsanordnung nach einem der vorhergehenden Ansprüche, **dadurch gekennzeichnet, dass** für den Blindniet (4) eine Verdrehsicherung vorgesehen ist, die von einem unrunden Querschnitt des Oberteils (12) und des zugehörigen Befestigungsloches (44) oder von einem an dem Flansch (32) vorgesehenen Ansatz (34) gebildet wird.

7. Schraubblindniet-Verbindungsanordnung nach einem der vorhergehenden Ansprüche, **dadurch gekennzeichnet, dass** die Schraube (2) als selbstfurchende Schraube ausgebildet ist, die beim Einschrauben in die glatt ausgebildete Aufnahmebohrung (18) des Unterteils (10) des Blindniet (4) ein entsprechendes Gewinde formt.

8. Schraubblindniet-Verbindungsanordnung nach einem der Ansprüche 1 bis 6, **dadurch gekennzeichnet, dass** die Aufnahmebohrung (18) des Unterteils (10) des Blindniet (4) ein vorgeformtes Gewinde hat.

9. Schraubblindniet-Verbindungsanordnung nach einem der vorhergehenden Ansprüche, **dadurch gekennzeichnet, dass** die Schraube (2) aus Kunststoff oder Metall besteht.

10. Schraubblindniet-Verbindungsanordnung nach einem der vorhergehenden Ansprüche, **dadurch gekennzeichnet, dass** der Blindniet (4) aus einem schlagzähen Polyamid oder einem anderen schlagzähen Kunststoff besteht.

11. Schraubblindniet-Verbindungsanordnung nach einem der Ansprüche 1 bis 9, **dadurch gekennzeichnet, dass** der Blindniet (4) aus einem elastomeren Kunststoff oder Gummi besteht.

## Claims

1. A blind rivet screw connection assembly for connecting a lower member (40) and an upper member (42), comprising a screw (2) and a nut-like blind rivet (4) adapted to be inserted into mounting holes (44, 46) of the two members (40, 42) and adapted to threadingly engage each other for providing the connection, the blind rivet (4) made of a resiliently deformable material having a sleeve-shaped lower part (10) and a sleeve-shaped upper part (12) which are of a wall thickness dimensioned such that the lower part (10) is of high stiffness and the upper part (12) is of high flexibility, and which are integrally connected to each other by a shoulder-shaped transition (14) of reduced wall thickness such that when the screw (2) is threaded into the lower part (10) of the blind rivet (4) the wall (26) of the upper part (12) rolls along the outer surface (20) of the lower part (10) so as to be folded into a rivet bead (50) engaging the outer surface (20) of the lower part (10) in order to prevent the connection from being released, the upper part (12) of the blind rivet (4) having at its upper end a flange (32) which is sandwiched between the upper and lower members (40, 42) when assembled, **characterized in that** the upper and lower members (40, 42) are spaced from each other by a predetermined amount which exceeds the thickness of the flange (32) of the blind rivet (4) such that when the screw (2) is threaded into the lower part (10) the blind rivet is raised until the flange (32) of the blind rivet (4) engages the bottom surface of the upper member (42), and that the lower part (10) of the blind rivet (4) has its lower end closed by a bottom (24) which is spaced from the flange (32) such that the bottom (24) provides an abutment for limiting threading of the screw (2) thereinto.

2. The blind rivet screw connection assembly of claim 1, **characterized in that** the lower part (10) and the upper part (12) of the blind rivet (4) each have their outer surface (20, 30) formed as a polygon, with the polygonal surfaces of the upper part (12) being axially aligned to the respective polygonal surfaces of the lower part (10) so as to engage each other in surface-two-surface contact during formation of the rivet bead, and the lower part (10) passes into the upper part (12) in a torsion-free manner.

3. The blind rivet screw connection assembly of claim 1 or claim 2 **characterized in that** the outer surface (20) of the lower part (10) extends into said transition (14) by a tapered surface portion (22).

4. The blind rivet screw connection assembly of any of the preceding clims, **characterized in that** the upper part (12) has an outer surface (30) provided with nubs (36) serving as retention means.

5. The blind rivet screw connection assembly of any of the preceding claims, **characterized in that** the upper part (26) of the blind rivet (4) is dimensioned with respect to the mounting hole (44) of the lower member (40) such that the rivet bead (50) is folded into the mounting hole (44) of the lower member (40).

6. The blind rivet screw connection assembly of any of the preceding claims, **characterized in that** there is provided a means for preventing rotation of the blind rivet (4), said means comprising uncircular cross-sections of the upper part (12) and the associated mounting hole (44) or an extension (34) provided at the flange (32).

7. The blind rivet screw connection assembly of any of the preceding claims, **characterized in that** the screw (2) is a self-tapping screw which forms respective threads in the smooth receiving bore (18) of the lower part (10) of the blind rivet (4) when the screw is threaded thereinto.

8. The blind rivet screw connection assembly of any of claims 1 to 6, **characterized in that** the receiving bore (18) of the lower part (10) of the blind rivet (4) is provided with pre-formed threads.

9. The blind rivet screw connection assembly of any of the preceding claims, **characterized in that** the screw (12) is made of plastic material or metal.

10. The blind rivet screw connection assembly of any of the preceding claims, **characterized in that** the blind rivet (4) is made of an impact-resistent polyamid or another impact-resistent plastic material..

11. The blind rivet screw connection assembly of any of claims 1 to 9, **characterized in that** the blind rivet (4) is made of an elastomeric plastic material or rubber.

## Revendications

1. Dispositif d'assemblage à rivet aveugle vissé pour raccorder un élément de construction inférieur (40) à un élément de construction supérieur (42), constitué d'une vis (2) et d'un rivet aveugle du type écrou (4) qui peuvent être insérés dans des trous de fixation (44, 46) des deux éléments de construction (40, 42) et vissés l'un avec l'autre pour former l'assemblage, moyennant quoi le rivet aveugle (4), qui est fait d'un matériau déformable élastiquement, comporte une partie inférieure en forme de manchon (10) et une partie supérieure en forme de manchon (12) dont l'épaisseur de paroi est dimensionnée de telle manière que la partie inférieure (10) a une rigidité élevée et la partie supérieure (12) une flexibilité élevée, et qui sont raccordées l'une à l'autre en un seul morceau par une jonction (14) décalée en forme d'épaulement ayant une faible épaisseur de paroi, de sorte que, lorsque la vis (2) est vissée dans la partie inférieure (10) du rivet aveugle (4), la paroi (26) de la partie supérieure (12) roule sur la surface extérieure (20) de la partie inférieure (10) et est ainsi pliée pour former un bourrelet de rivet (50) qui s'appuie sur la surface extérieure (20) de la partie inférieure (10) afin d'empêcher un desserrage de l'assemblage, moyennant quoi la partie supérieure (12) du rivet aveugle (4) comporte à son extrémité supérieure une bride (32) qui, à l'état assemblé, se trouve entre la partie supérieure (40) et la partie inférieure (42), **caractérisé en ce que** la partie supérieure (40) et la partie inférieure (42) sont placées à une distance prédéterminée l'une de l'autre, qui est supérieure à l'épaisseur de la bride (32) du rivet aveugle (4), de sorte que, lorsque la vis (2) est vissée dans la partie inférieure (10), le rivet aveugle est soulevé jusqu'à ce que la bride (32) du rivet aveugle (4) s'appuie sur la face inférieure de l'élément de construction supérieur (42) et que la partie inférieure (10) du rivet aveugle (4) est obturée à son extrémité inférieure par un fond (24) dont la distance par rapport à la bride (32) est dimensionnée de telle manière que le fond (24) sert de limite de butée pour le mouvement de vissage de la vis (2).

2. Dispositif d'assemblage à rivet aveugle vissé selon la revendication 1, **caractérisé en ce que** la surface extérieure (20, 30) de la partie inférieure (10) et de la partie supérieure (12) du rivet aveugle (4) est configurée comme un polygone et **en ce que** les surfaces polygonales de la partie supérieure (12) sont orientées axialement par rapport aux surfaces polygonales de la partie inférieure (10), afin qu'elles s'appuient les unes sur les autres de manière plane pendant la formation du bourrelet de rivet, et la partie inférieure (10) pénètre dans la partie supérieure (12) en étant déchargée de torsion.

3. Dispositif d'assemblage à rivet aveugle vissé selon la revendication 1 ou 2, **caractérisé en ce que** la surface extérieure (20) de la partie inférieure (10) rejoint la jonction (14) par l'intermédiaire d'une partie de surface conique (22).

4. Dispositif d'assemblage à rivet aveugle vissé selon l'une quelconque des revendications précédentes, **caractérisé en ce que** la partie supérieure (12) comporte sur sa surface extérieure (30) des noppes (36) qui servent de sécurité contre la perte.

5. Dispositif d'assemblage à rivet aveugle vissé selon l'une quelconque des revendications précédentes, **caractérisé en ce que** la partie supérieure (26) du rivet aveugle (4) est dimensionnée de telle manière par rapport au trou de fixation (44) de l'élément de construction inférieur (40) que le bourrelet de rivet (50) est plié dans le trou de fixation (44) de l'élément de construction inférieur (40).

6. Dispositif d'assemblage à rivet aveugle vissé selon l'une quelconque des revendications précédentes, **caractérisé en ce qu'**il est prévu pour le rivet aveugle (4) une sécurité anti-torsion qui est formée par une section transversale ovalisée de la partie supérieure (12) et du trou de fixation correspondant (44) ou par un épaulement (34) prévu sur la bride (32).

7. Dispositif d'assemblage à rivet aveugle vissé selon l'une quelconque des revendications précédentes, **caractérisé en ce que** la vis (2) est configurée comme une vis auto-taraudeuse qui, lors du vissage dans l'alésage lisse de réception (18) de la partie inférieure (10) du rivet aveugle (4), forme un filetage approprié.

8. Dispositif d'assemblage à rivet aveugle vissé selon l'une quelconque des revendications 1 à 6, **caractérisé en ce que** l'alésage de réception (18) de la partie inférieure (10) du rivet aveugle (4) comporte un filetage préformé.

9. Dispositif d'assemblage à rivet aveugle vissé selon l'une quelconque des revendications précédentes, **caractérisé en ce que** la vis (2) est constituée de matière plastique ou de métal.

10. Dispositif d'assemblage à rivet aveugle vissé selon l'une quelconque des revendications précédentes, **caractérisé en ce que** le rivet aveugle (4) est constitué d'un polyamide résilient ou d'une autre matière plastique résiliente.

11. Dispositif d'assemblage à rivet aveugle vissé selon l'une quelconque des revendications 1 à 9, **caractérisé en ce que** le rivet aveugle (4) est constitué d'une matière plastique élastomère ou de caoutchouc.
